(19) **Europäisches Patentamt**

**European Patent Office**

**Office européen des brevets**

(11) Veröffentlichungsnummer: **0 278 232 B1**

# EUROPÄISCHE PATENTSCHRIFT

(45) Veröffentlichungstag der Patentschrift: **15.04.92**

(51) Int. Cl.⁵: **B60K 31/04**

(21) Anmeldenummer: **88100287.7**

(22) Anmeldetag: **12.01.88**

(54) **Verfahren zur Beeinflussung der Fahrgeschwindigkeit eines Kraftfahrzeugs und Einrichtung zur Durchführung des Verfahrens.**

(30) Priorität: **06.02.87 DE 3703645**

(43) Veröffentlichungstag der Anmeldung:
**17.08.88 Patentblatt 88/33**

(45) Bekanntmachung des Hinweises auf die
Patenterteilung:
**15.04.92 Patentblatt 92/16**

(84) Benannte Vertragsstaaten:
**DE FR IT**

(56) Entgegenhaltungen:
EP-A- 0 021 935     DE-A- 2 537 415
DE-A- 2 701 567     DE-A- 2 842 023
DE-A- 3 416 369     DE-A- 3 510 174
DE-B- 2 546 529

(73) Patentinhaber: **ROBERT BOSCH GMBH**
**Postfach 30 02 20**
**W-7000 Stuttgart 30(DE)**

(72) Erfinder: **Preis, Karl Heinz, Dipl.-Ing.**
**Holzmattweg 6a**
**W-7582 Bühlertal(DE)**
Erfinder: **Schnaibel, Eberhard, Dipl.-Ing.**
**Hochstetter Strasse 1/5**
**W-7254 Hemmingen(DE)**

Rank Xerox (UK) Business Services

**Beschreibung**

Stand der Technik

Die Erfindung geht aus von einem Verfahren zur Beeinflussung der Fahrgeschwindigkeit eines Kraftfahrzeugs und Einrichtung zur Durchführung des Verfahrens nach den Gattungen der Ansprüche 1 und 15. Aus der DE-A-25 46 529 ist schon eine Geschwindigkeitsregeleinrichtung für Kraftfahrzeuge bekannt, bei der jedoch bei Beschleunigungsvorgängen plötzlich ein neuer Geschwindigkeitssollwert vorgegeben wird. Da das Fahrzeug relativ träge reagiert, besteht die Gefahr von Regelschwingungen, die zumindest einige Perioden nach Erreichen des neuen Sollwertes andauern. Um ein solches Überschwingen zu verringern, ist es aus der DE-A-25 37 415 bekannt, einen Regler mit PD-Verhalten einzusetzen. Bei einem solche PD- bzw. P-Regler wird durch unterschiedliche Belastungen und variables Spiel in der Stellgliedanlenkung die geregelte Geschwindigkeit nach dem Setzvorgang ungenau. Wird in diesem Fall hingegen ein I-Regler verwendet, so erzielt man einen schlechteren Fahrkomfort.

Die DE-A-27 01 567 beschreibt eine Geschwindigkeitssteuereinrichtung für Kraftfahrzeuge, bei der gewünschte Beschleunigungs- und Verzögerungsvorgänge vom Fußfahrgeber aus definiert gesteuert werden können. Erreicht wird dies durch Bewertung eines die Stellung des Fußfahrgebers kennzeichnenden Signals nach einer vorbestimmten Funktion und durch Anwendung eines Integrators im Übertragungsweg des Reglers für die Fahrgeschwindigkeit. Die Vorgabe bestimmter Beschleunigungen geschieht dabei in der Art einer reinen Steuerung, bei der die Istgeschwindigkeit auf einen Sollwert nachgeführt wird. Zum einen setzt diese Einrichtung eine unübliche Benutzungsart des Fußfahrgebers als Beschleunigungsgeber voraus, zum anderen können Ungenauigkeiten der Endgeschwindigkeit nach Beschleunigungsvorgängen, beispielsweise in unebenem Gelände oder bei sonst größeren Einwirkungen auf das Fahrzeug, auftreten.

In der DE-A-28 42 023 ist eine Geschwindigkeitsregeleinrichtung für Kraftfahrzeuge beschrieben, bei der während Beschleunigungsvorgängen die Istgeschwindigkeit einer rampenförmig verlaufenden Sollgeschwindigkeit nachgeführt wird so, daß ein weicher Übergang auf die jeweils neue Endgeschwindigkeit erfolgt und diese jeweils genau erreicht wird. Diese Einrichtung erfordert jedoch einen großen diskreten Schaltungsaufwand und ist somit verhältnismäßig teuer. Obwohl sie voll digital arbeitet, erlaubt sie nicht ohne weiteres einen Bauelemente einsparenden einkörperlichen Verbund mit einer ebenfalls elektronisch wirkenden Kraftstoffzumessung, insbesondere nicht unter Mitbenutzung eines ohnehin vorhandenen Rechners in solch einem elektronisch wirkenden Kraftstoffzumessungssystem.

Aus der DE-A-35 10 174 ist ein Fahrgeschwindigkeitsregler bekannt, bei dem im stationären Betriebszustand eine Geschwindigkeitsregelung, im dynamischen Betriebszustand eine Beschleunigungsregelung vorgenommen wird. Der Übergang vom dynamischen in den stationären Betriebzustand wird dabei unter Beeinflussung des Integralanteils des Geschwindigkeitsreglers durch Regelung gestaltet. Sowohl die Erfassung des Beschleunigungsistsignals zu Regelungszwecken als auch die Ausgestaltung des Geschwindigkeitsreglers hinsichtlich Dynamik und Stabilität erfordert hohe Genauigkeit und Aufwand. Überschwingen beim Übergang vom dynamischen in stationären Betriebszustand lassen sich aufgrund der vergleichsweise großen Langsamkeit des Reglers nur schwer vermeiden. Dadurch werden sowohl die Anpaßfähigkeit des Fahrgeschwindigkeitsreglers an unterschiedliche Fahrzeugtypen als auch der Fahrkomfort beeinträchtigt.

Es ist somit eine der Aufgabe der Erfindung, eine Geschwindigkeitsregelung für Kraftfahrzeuge zu schaffen, die das Erreichen bzw. Einhalten einer vorgewählten Fahrgeschwindigkeit mit hohem Fahrkomfort erlaubt und darüber hinaus unter Nutzung von Steuerfunktionen eines ohnehin vorhandenen Rechners eine Vereinfachung und Verbilligung einer solchen Einrichtung zuläßt. Eine weitere Aufgabe der Erfindung ist, bei einer solchen Geschwindigkeitsregelung eine Einflußnahme auf die Fahrgeschwindigkeit vorzugsweise am Fußfahrgeber vorbei zu ermöglichen. Erfindungsgemäß wird diese Aufgabe durch eine Regelung mit den kennzeichnenden Merkmalen der unabhängigen Ansprüche 1 und 15 gelöst.

Vorteile der Erfindung

Die Erfindung bietet den Vorteil, daß der Fahrzeugführer auf die Fahrzustände des Kraftfahrzeugs am Fußfahrgeber vorbei Einfluß nehmen kann. Gegenüber bekannten Verfahren und Einrichtungen bietet die Fahrgesschwindigkeitsregelung nach dem Verfahren gemäß Anspruch 1 unter Anwendung der Einrichtung zur Durchführung des Verfahrens gemäß Anspruch 15 einen sehr hohen Fahrkomfort. Insbesondere erlaubt die erfindungsgemäße Fahrgeschwindigkeitsregelung eine einfache Anpassung an das unterschiedliche dynamische Verhalten unterschiedlicher Fahrzeugtypen, indem fahrzeugcharakteristische Kennwerte im Speicher eines Rechners ablegbar sind. Durch die in den abhängigen Ansprüchen aufgeführten Maßnahmen sind vorteilhafte Weiterbildungen und Verbesserungen der in den unabhängigen Ansprüchen 1 und 15 angegebenen Fahrgeschwindigkeitsregelung möglich. Besonders vorteilhaft ist, daß durch eine betriebszustandsabhängige Steuerung der Integralwerte eines benutzten PI-Reglers Geschwindigkeitsübergänge ohne merkbares Einschwingen weich erfolgen.

Zeichnung

Ein Ausführungsbeispiel der Erfindung ist in der Zeichnung dargestellt und in der nachfolgenden Beschreibung näher erläutert. Es zeigen: Figur 1 eine schematische Darstellung der einzelnen Bestandteile einer erfindungsgemäßen Einrichtung zur Beeinflussung der Fahrgeschwindigkeit eines Kraftfahrzeugs, Figur 2 eine Veranschaulichung wesentlicher Hardware- und Software-Bestanteile eines elektronischen Steuergerätes zur Beeinflussung der Fahrgeschwindigkeit eines Kraftfahrzeugs, Figur 3 eine Veranschaulichung des zeitlichen Verlaufes der Stellgröße, insbesondere eines Stellungswinkels, und der Fahrgeschwindigkeit in Abhängigkeit von einem Fahrerwunschsignal "Beschleunigen", Figur 4 eine Veranschaulichung des zeitlichen Verlaufs einer Stellgröße, insbesondere eines Stellwinkels, und der Fahrgeschwindigkeit in Abhängigkeit von einem Fahrerwunschsignal "Verzögern", Figur 5 eine Veranschaulichung des zeitlichen Verlaufs der Stellgröße, insbesondere eines Stellwinkels, und der Fahrgeschwindigkeit in Abhängigkeit von einem Fahrerwunschsignal "Wiederaufnahme einer vor einer Verzögerung gehaltenen Geschwindigkeit".

Beschreibung des Ausführungsbeispieles

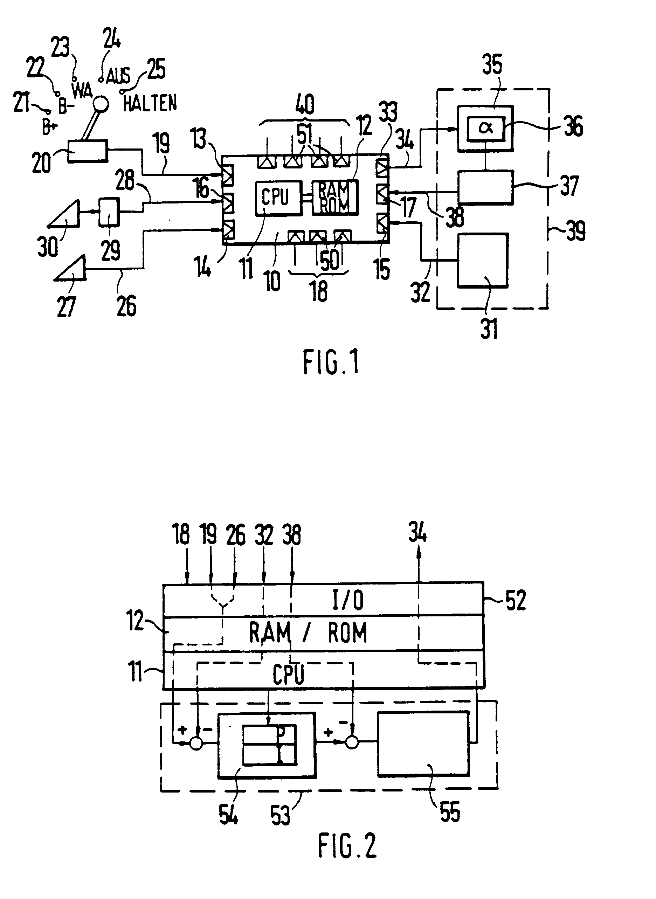

Das erfindungsgemäße Verfahren zur Beeinflussung der Fahrgeschwindigkeit eines Kraftfahrzeugs stützt sich vorzugsweise auf eine Einrichtung gemäß Figur 1. Diese umfaßt ein elektronisches Steuergerät 10, welches einen Mikrorechner 11 mit Schreib-Lese-Speicher 12 enthält. Dieses Steuergerät 10 weist wenigstens Signaleingänge 13, 14, 15, 16 und 17 auf. Optimal können noch weitere Eingänge 50 vorgesehen sein. An den Eingang 13 ist über eine Signalleitung 19 ein Fahrzustandswähler 20 angeschlossen, der wenigstens zwei Stellungen 21 und 22, ggf. jedoch noch weitere Stellung 23, 24 und 25 aufweist. An den Eingang 14 ist über eine Signalleitung 26 ein Fußfahrgeber (elektrisches Gaspedal) 27 angeschlossen. Über eines Signalleitung 28 ist der Eingang 16 mit dem Bremslichtschalter 29 verbunden, der vom Bremspedal 30 bzw. von der hier nicht gezeigten Bremsanlage ausgelöst wird. Über eine Signalleitung 32 ist der Eingang 15 des elektronischen Steuergerätes 10 mit einem Istgeschwindigkeitsgeber 31 verbunden. Das elektronische Steuergerät 10 weist ferner einen Ausgang 33 auf, der über eine Leitung 34 ein Stellsignal an einen elektromotorischen Steller 35 abgibt. Ggf. weist das elektronische Steuergerät 10 noch weitere Ausgänge 51 auf. Der elektromotorische Steller 35 erzeugt in Abhängigkeit vom antreibenden Stellsignal einen Stellungswinkel , beispielsweise als Stellungswinkel einer Drosselklappe oder einer Regelwelle einer Dieseleinspritzpumpe. Der Stellungswinkel wird auf einen Rückmeldegeber 37 übertragen, der ein dem tatsächlichen Stellungswinkel entsprechendes Signal über die Verbindungsleitung 38 an einen weiteren Eingang 17 des elektronischen Steuergeräts abgibt. Der elektromotorische Steller 35, der Istgeschwindigkeitsgeber 31 sowie das Fahrzeug, die Brennkraftmaschine und das Rad-Straße-System bilden die symbolisch gekennzeichnete Regelstrecke 39. Über weitere Ansteuerleitungen 18 können weiteren Eingängen 50 des elektronischen Steuergerätes ggf. weitere Signale, insbesondere die verschiedenen Betriebszustände einer Brennkraftmaschine charakterisierende Meßwerte, zugeführt werden. Ggf. können den weiteren Ausgängen 51 über Ausgangsleitungen 40 weitere Stellsignale, Fahrzustandsinformationen oder Alarmsignale entnommen werden. Der Mikrorechner 11 und der RAM/ROM-Speicher 12 bilden in Verbindung mit einer Programmvorschrift einen PI-Regler nach, dessen P- und I-Verstärkung betriebszustandsabhängig beeinflußbar sind. Bei herkömmlicher Betriebsweise wird dem Steuergerät 10 der Fahrerwunsch über den Fußfahrgeber 27 mitgeteilt. Durch Betätigung des Fahrzustandswähler 20 in eine der Auswahlstellungen 21 bis 25 kann der Fahrzeugführer die Fahrgeschwindigkeit unter Umgehung des Fahrpedals 27 "quasi-automatisch" beeinflussen. Den Stellungen 21 bis 25 können beispielsweise die Fahrzustände "Beschleunigen", "Verzögern", "Wiederaufnahme", "Aus" und "Geschwindigkeit halten" entsprechen. Das Zusammenwirken des Fahrzustandswählers 20 mit dem elektronischen Steuergerät 10 erfolgt vorzugsweise so, daß sich in unterschiedlichen Wahlstellungen 21 bis 25 unterschiedliche Ansprechweisen des elektronischen Steuergeräts 10 ergeben. Beispielsweise kann vorgesehen sein, daß in Wahlstellungen 21 und 22 - entsprechend Fahrzuständen "Beschleunigen", "Verzögern" - dem Fahrerwunsch entsprechend die Fahrgeschwindigkeit so lange beeinflußt wird, als der Fahrzustandswähler 20 in betreffenden Wahlstellungen 21 bzw. 22 gehalten wird. Im Gegensatz dazu kann in anderen Wahlstellungen 23 bzw. 25 - entsprechend Fahrzuständen "Wiederaufnahme", "Geschwindigkeit halten" - die selbsttätige Ausführung des Fahrerwunsches durch eine nur momentane Verbringung des Fahrzustandswählers 20 in die betreffenden Wahlstellungen erfolgen.

Die Funktion der erfindungsgemäßen Einrichtung zur Beeinflussung der Fahrgeschwindigkeit eines Kraftfahrzeugs und das Verfahren, nach dem diese Beeinflussung vorgenommen wird, wird nun anhand nachfolgender Figuren 2 bis 6 erläutert.

Gemäß Figur 2 läßt sich die erfindungsgemäße Einrichtung zur Beeinflussung der Fahrgeschwindigkeit eines Kraftfahrzeugs in zwei Komponenten zerlegt betrachten. Die eine davon ist das sogenannte Hardware-Modul mit dem Mikrorechner 11, dem Schreib-Lese-Speicher 12 und einer Ein-Ausgabeeinheit 52, die andere ist das Software-Modul 53, das in Zusammenwirken mit dem Hardware-Modul wenigstens zwei Regler 54 und 55 implimentiert. Dabei ist der erste Regler 54 als PI-Regler ausgeführt, dessen P- und I-Verstärkung durch Setzen entsprechender Werte anpaßbar sind.

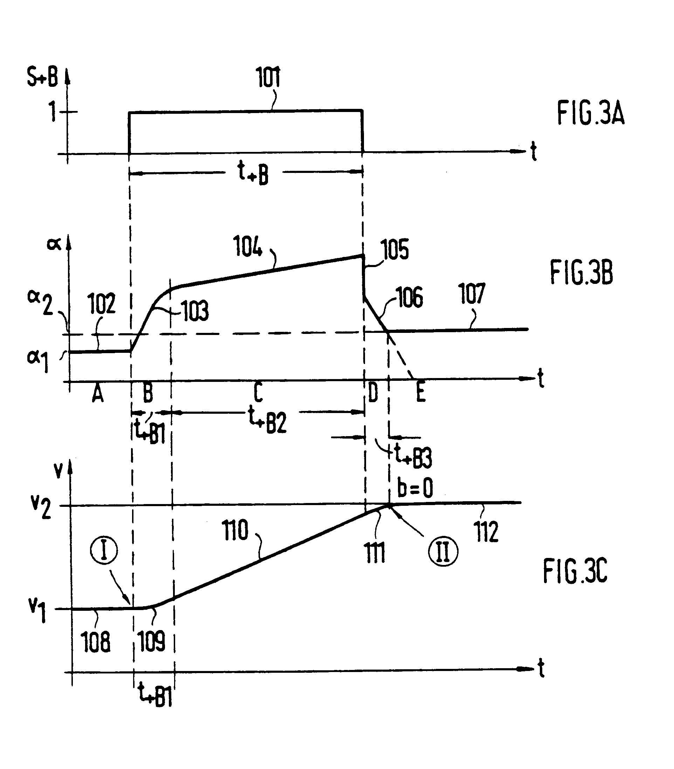

Zur Erläuterung des Verfahrens und der Funktion zur Beeinflussung der Fahrgeschwindigkeit eines Kraftfahrzeugs wird auf Figur 3 Bezug genommen und von einem Fahrzustand A ausgegangen, wie er beispielsweise durch vorherige Anwahl des Fahrzustandes 25 ("Halten der Geschwindigkeit") vorliegen kann; der konstanten Fahrgeschwindigkeit $v_1$ und dem zugehörigen Stellwinkel $\alpha_1$ zur Beeinflussung der Gemischzumessung in die Brennkraftmaschine entsprechen die Zeitverläufe 102 bzw. 108. Während des Zeitabschnitts A arbeitet der Regler 54 als PI-Regler mit fest vorgegebenem P-I-Anteil; regelungstechnisch liegt also in dieser Phase die stationäre Regeldifferenz Null vor. Wünscht der Fahrer eine Beschleunigung des Fahrzeugs, bringt er den Fahrzustandswähler 20 für die Dauer seines Wunsches $t_{+B}$ in die Stellung 21 ("Beschleunigen"); der Fahrzustandswähler 20 gibt über die Leitung 19 so lange das logische Signal 101 gemäß Figur 3a an das Hardware-Modul des elektronischen Steuergeräts 10 ab. Beim Beginn des Beschleunigungsvorganges - gekennzeichnet durch (I) in Figur 3c - wird die Integralkomponente des Reglers zu Null gemacht, so daß der Regler während der Beschleunigungsphase B, C und D als reiner Proportionalregler für die Geschwindigkeit arbeitet. Dies bedeutet wegen der Massenträgheit des Fahrzeuges, daß die innere Regeldifferenz bei Vorgabe eines zeitlinear anwachsenden Geschwindigkeitssollwertes so weit anwächst, bis die Beschleunigung einen stationären Wert erreicht hat; dies ist nach der Zeit $t_{+B1}$ am Ende der Phase B der Fall, während der bis zum Erreichen einer konstanten inneren Regeldifferenz der Stellungswinkel $\alpha$ sich zunächst stark über der Zeit ändert. Dies ist durch den Zeitverlauf 103 in Figur 3b dargestellt, während das Übergangsverhalten der Geschwindigkeit durch den Zeitverlauf 109 in Figur 3c wiedergegeben ist. War der Anwahl der Stellung 21 ("Beschleunigen") nicht die Stellung 25 ("Halten den Geschwindigkeit") vorausgegangen, und wird stattdessen von einer Steuerung über den Fußfahrgeber 27 aus ein Beschleunigungsvorgang eingeleitet, so wird der I-Zweig des PI-Reglers 54 auf einen während des anschließenden Beschleunigungsvorganges konstant gehaltenen Wert vorgeladen, um ein "Durchsacken" der Geschwindigkeit zu verhindern. Dazu wird dieser Wert durch Maximalwertauswahl entweder vom augenblicklichen, über den Fußfahrgeber 27 eingeholten Fahrerwunsch oder von einem aus der momentanen Geschwindigkeit fahrzeugspezifisch berechneten Näherungswert gebildet.

Auf diese Weise ist der Übergang zur Beschleunigung ohne Ruckeln zu erreichnen auch dann, wenn der Fahrer das Fahrpedal schon entlastet bevor er die Stellung 25 am Fahrzustandswähler 20 angewählt hat. Sobald die Beschleunigung des Fahrzeugs einen konstanten Wert erreicht hat, wächst der Stellungswinkel $\alpha$ entsprechend dem Zeitverlauf 104 während der Phase C in Figur 3b mit verringerter Rate monoton über der Zeit an:; dem entspricht in Figur 3c ein rampenförmiger Verlauf 110 für die Fahrgeschwindigkeit für die Zeitdauer $t_{+B2}$ der Phase C in Figur 3c.

Wird nach der Zeitdauer $t_{+B}$ am Fahrzustandswähler 20 der Fahrzustand 21 "Beschleunigen: abgewählt, erfolgt ein Rücksprung des Stellungswinkels $\alpha$ entsprechend dem Zeitverlauf 105 in Figur 3b um einen Betrag, der proportional zum Absolutwert des Stellungswinkels $\alpha$ unmittelbar vor Abwahl des Fahrzustandes 21 ist. Dabei können in Abhängigkeit des vorherigen Absolutwertes des Stellungswinkels $\alpha$ in bezug auf einen bestimmten Grenzwinkel, beispielsweise 75 % des maximal möglichen Stellungswinkels $\alpha$ verschiedene Proportionalitätsfaktoren Verwendung finden. Nach diesem Rücksprung wird der verbliebene Stellungswinkel $\alpha$ entsprechend dem zeitlichen Verlauf 106 in Figur 3b während der Phase D im Zeitraum $t_{+B3}$ monoton über der Zeit reduziert so lange, bis die Beschleunigung Null erkannt wird. Die Steigung des Zeitverlaufs 106 des Stellungswinkels $\alpha$ wird betragsmäßig proportional zum Stellungswinkel $\alpha$ vor Abwahl des Fahrzustandes "Beschleunigen" gewählt. Sobald die Beschleunigung Null erkannt wird, wird die Ausgangsgröße des P-Reglers als neuer Anfangswert in den I-Regler geladen. Dabei wird der Istwert der Geschwindigkeit zum Sollwert für den PI-Regler gesetzt. In diesem Augenblick wird dann der P-Anteil identisch Null, da die Soll-Ist-Regeldifferenz dann Null ist. Durch diese Maßnahme wird ein Einschwingen der Fahrgeschwindigkeit ohne Verzögerungsphasen bzw. Überschwingen erreicht; der Übergangspunkt ist in Figur 3c durch (II) gekennzeichnet. Vorteilhaft ist nach vorgesehen, daß der Abfall des rampenförmigen Zeitverlaufs 106 in Figur 3c verdoppelt wird, sofern die Fahrgeschwindigkeit bei Erreichen der Beschleunigung Null um einen bestimmten Betrag - beispielsweise um 1,25 km/h - über dem Wert am Ende der Phase C, d.h. bei Abwahl des Fahrzustandes "Beschleunigen", liegt. Es ist noch vorgesehen, daß bei Erreichen der Beschleunigung Null der Fahrgeschwindigkeit als Sollwert für eine ggf. später gewünschte Wiederaufnahme im Speicher 12 gespeichert wird.

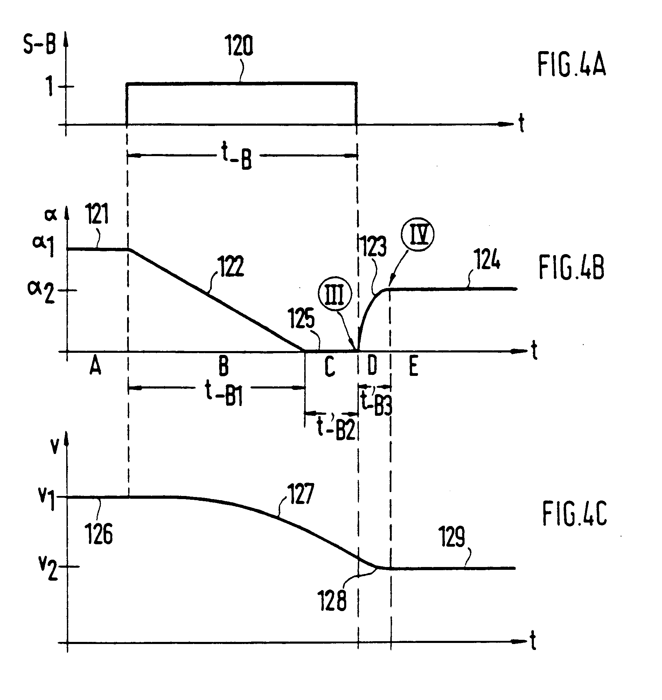

Figur 4 veranschaulicht die Verzögerung des Fahrzeuges von einer Geschwindigkeit $v_1$ auf die Geschwindigkeit $v_2$. Es ist davon ausge gangen, daß während der Phase A eine konstante Geschwindigkeit $v_1$ und demgemäß auch ein konstanter Stellungswinkel $\alpha_1$ entsprechend den Zeitverläufen 121 und 126 in Figur 4b bzw. Figur 4c entspricht. Bei Anwahl des Fahrzustandes 22 ("Verzögern") gibt der Fahrzustandswähler 20 für die Dauer $t_B$ des Fahrerwunsches ein logisches Setzsignal entsprechend dem Zeitverlauf 120 in Figur 4a an das elektronische Steuergerät 10 ab. Daraufhin wird während einer Phase B für die Zeitdauer $t_{B1}$ der Stellwinkel $\alpha$ monoton über der Zeit reduziert mit einer Steigung, die betragsmäßig proportional zum vorherigen Stellwinkel $\alpha_1$ gewählt ist. Abhängig von dieser Steigung endet die Phase B nach der Zeitdauer $t_{B1}$, indem der Stellwinkel $\alpha$ dann seinen kleinsten Wert, vorzugsweise den Werk Null angenommen hat. Dauert der Fahrerwunsch länger an als die Rückführung des Stellwinkels $\alpha$, tritt gemäß Figur 4b während der Differenzzeit $t_{B2}$ der Nullzeitverlauf 125 der Stellungswinkels $\alpha$ auf; diese Phase ist mit C gekennzeichnet. Den Zeitverlauf 122 und 125 in Phasen B und C gemäß Figur 4b entspricht der Zeitverlauf 127 der Geschwindigkeit gemäß Figur 4c. Ist der Fahrzustand "Verzögern" nur kurze Zeit wirksam, kann die Phase C gänzlich entfallen; der Stellwinkel $\alpha$ erreicht dann nicht seinen Minimalwert und die Phase B schließt dann unmittelbar an dien Phase D an. Der entsprechende Verlauf der Geschwindigkeit entspricht aber auch in diesem Fall prinzipiell dem in Figur 4c dargestellten. Bei Abwahl des Fahrzustandes "Verzögern" wird dem I-Regler, um das Einschwingen des P-Reglers zu unterstützen, ein Anfangswert vorgeladen, der aus einer Maximalwertauswahl aus Fahrerwunsch (am Fahrpedal 27 vorliegend) und einem aus der momentanen Geschwindigkeit fahrzeugspezfisch berechneten Näherungswert gebildet wird; gleichzeitig wird die Verstärkung des P-Reglers verringert und damit auf konstante Fahrgeschwindigkeit geregelt. Daraus resultiert zunächst ein relativ steil ansteigender Zeitverlauf 123 des Stellwinkels $\alpha$ während der Phase D mit der Zeitdauer $t_{B3}$. Während der Phase D ergibt sich daraus gemäß Figur 4c ein weicher Übergang 128 auf den Endwert $v_2$, der in der an schließenden Phase E entsprechend dem Zeitverlauf 129 durch den Stellwinkel $\alpha_2$ entsprechend dem Zeitverlauf 124 in Figur 4b gehalten wird. Die Proportionalverstärkung wird bei Beginn der Phase D, gekennzeichnet in Figur 4b durch (III), bei Erreichen der Beschleunigung Null im Punkt (IV) am Schluß der Phase D verringert. Gleichzeitig wird die vorherige Ausgangsgröße des P-Reglers als neuer Anfangswert in den I-Regler geladen. Dabei wird der Istwert der Geschwindigkeit zum Sollwert für den PI-Regler gesetzt; die erreichte Geschwindigkeit $v_2$ wird dann vom PI-Regler 54 dann mit innerer Regeldifferenz Null gehalten. Auch hierbei kann beim Erreichen der Beschleunigung Null die Geschwindigkeit $v_2$ als Sollwert für eine ggf. späterer gewünschte Wiederaufnahme im Speicher 12 abgelegt werden.

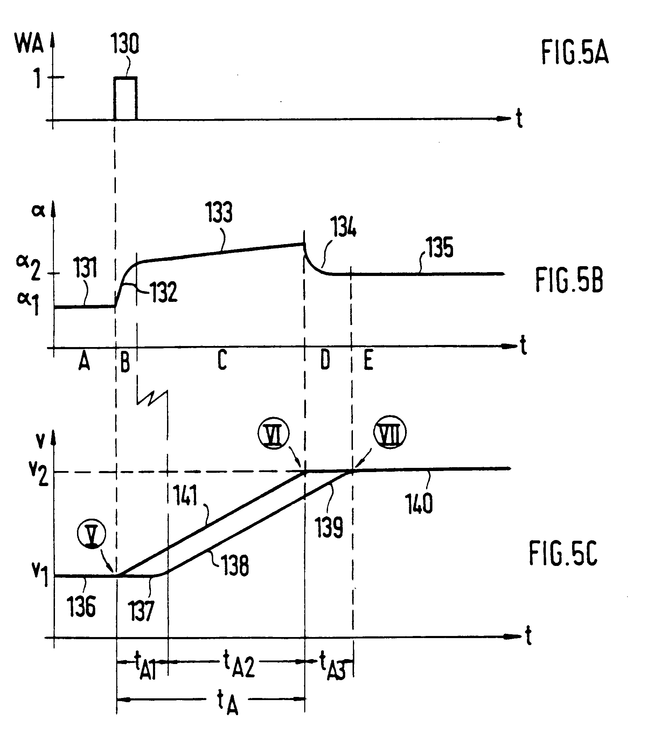

Ausgehend von einer Fahrgeschwindigkeit $v_1$ ist in Figur 5 die Wiederaufnahme einer - z.B. vor einem Bremsmanöver - gehaltenen Fahrgeschwindigkeit $v_2$ dargestellt. Der Fahrzeugführer wählt den Fahrzustand 23 ("Wiederaufnahme") durch kurze Betätigung des Wahlschalter 20 an, der ein Setzsignal entsprechend dem Zeitverlauf 130 in Figur 5a an das elektronische Steuergerät 10 abgibt. Ausgehend von der Geschwindigkeit $v_1$ und ihrem Zeitverlauf 136 in Figur 5c und dem entsprechenden Stellungswinkel $\alpha_1$ und seinem Zeitverlauf 131 während der Phase A in Figur 5b läuft nun der bereits zu Figur 3 beschriebene Beschleunigungsvorgang selbsttätig ab; dabei wird der I-Zweig der PI-Reglers 54 wie bei der Anwahl des Fahrzustandes "Beschleunigen" auf einen Wert vorgeladen, der durch Maximalwertauswahl entweder vom augenblicklichen, über den Fußfahrgeber 27 eingehaltenen Fahrerwunsch oder von einem aus der momentanen Geschwindigkeit fahrzeugspezifisch berechneten Näherungswert gebildet wird. Ein Unterschied gegenüber Figur 3 besteht noch darin, daß die Dauer $t_A$ der Phasen B und C hier nicht der Einwirkungsdauer eines Fahrerwunsches entspricht, sondern festgelegt ist durch den Startzeitpunkt und den Stoppzeitpunkt eines von der Ausgangsgeschwindigkeit $v_1$ bis zur wiederaufzunehmenden Geschwindigkeit $v_2$ monoton über der Zeit wachsenden Geschwindigkeitssollwertes für den Regler 54. Analog zum Beschleunigungsvorgang gemäß Figur 3 wird auch hier bei der Anwahl des Fahrzustandes "Wiederaufnahme" am Punkt (V) in Figur 5c die Integralverstärkung des Reglers 54 zu Null gessetzt und der I-Anteil unveränderlich festgehalten; demgemäß entsprechen die Zeitverläufe 132 und 133 des Stellwinkels $\alpha$ in Figure 5b und 137 und 138 der Geschwindigkeit in Figur 5c den entsprechenden Zeitverläufen 103 und 104 bzw. 109 und 110 in Figur 3b bzw. Figur 3c; sie werden daher nicht näher erörtert. Der Übergang in der Phase D während der Zeit $t_{A3}$ kann analog zu Figur 3 erfolgen; auch dies wird hier nicht weiter erörtert. Eine vorteilhafte Gestaltung der Überganges zur wiederaufzunehmenden Geschwindigkeit $v_2$ ist jedoch auch dadurch möglich, daß nach Ablauf der Zeit $t_A$, d.h. im Stoppunkt (VI) der Sollwertrampe 141 zunächst eine erste, stark reduzierte Integralverstärkung in den Regler 54 geladen wird, wobei diese Integralverstärkung umso größer gewählt werden kann, je größer der Stellwinkel $\alpha$ nach Ablauf der Zeit $t_A$ ist. Die Ausregelung der Regelabweichung des während den Phasen B und C als Proportionalregler wirkenden Reglers 54 durch stufenweise Wiedereinsetzung und Anpassung einer Integralkomponente kann besonders vorteilhaft erfolgen, indem vor Erreichen der Beschleunigung Null eine erste oder eine zweite Integralkomponente ausgewählt wird in Abhängigkeit davon, ob der Stellungswinkel $\alpha$ am Ende der Phase C kleiner oder größer als ein Grenzwinkel $\alpha_{GV}$ -beispielsweise 75 % des maximalen Stellungswinkels - erreicht war. Bei Erreichen der Beschleunigung Null - entsprechend dem Punkt (VII) in Figur 5c - kann eine solche vorübergehende Integralverstärkung durch eine andere, für die Geschwindigkeitsregelung vorgesehene, ersetzt werden. Der Zeitverlauf 140 der Geschwindigkeit in Figur 5c, der mit dem Zeitverlauf 135 der Stellwinkels $\alpha$ in Figur 5b korrespondiert, enspricht somit wiederum einer inneren Regeldifferenz Null am PI-Regler 54.

Das Beibehalten einer Fahrgeschwindigkeit, die durch Betätigung des Fußfahrgebers 27 erreicht wurde, kann durch Anwählen des Fahrzustanden 25 ("Halten der Geschwindigkeit") am Fahrzustandwähler 20 erfolgen. Dieser kann außerdem noch eine Stellung 24 ("Aus") aufweisen, deren Anwahl gleichberechtigt mit dem Betätigen der Bremse der Fahrzeugs den Fahrgeschwindigkeitsregler außer Betrieb setzt. Ist die beizubehaltende Fahrgeschwindigkeit erreicht, können die P- und I-Verstärkung vorzugsweise zeitlinear abgesenkt werden. Dadurch wird einer Schwingneigung der Fahrschwindigkeit entgegengewirkt. Der Fahrzustandswähler 20 kann in Abstimmung auf das elektronische Steuergerät 10 so ausgebildet sein, daß z.B. ein kurzes wiederholtes Betätigen des Fahrzustandswählers 20 in die Stellung 21 bzw. 22 eine stufenweise Erhöhung oder Erniedrigung der Fahrgeschwindigkeit (beispielsweise 1 km/h pro einmalig kurze Betätigung) zur Folge hat. Zu diesem Zweck kann die jeweilige Anwahlzeit mit einem Bezugswert verglichen werden, um einer länger dauernden Betätigung des Fahrzustandswählers 20 die in Figur 3 und Figur 4 beschriebenen Fahrzustände und einer kürzeren Betätigung desselben die stufenweise Erhöhung oder Erniedrigung einer zu haltenden Geschwindigkeit zuzuordnen. Zur Erhöhung der Geschwindigkeit ("tip up") kann dabei für jedes Inkrement dasselbe Verfahren wie bei der Funktion "Wiederaufnahme" und zur Verringerung der Gschwindigkeit ("tip down") für jedes Dekrement dasselbe Verfahren wie bei der Funktion "Verzögern" angewandt werden, so daß während Übergängen von einer ersten zu einer zweiten Geschwindigkeit also die I-Komponente des Reglers abgeschaltet bzw. festgehalten wird.

In jedem Falle kann der in jeweiligen Figuren 3b bis 5b angegebene Zeitverlauf ersatzweise auch statt eines Stellwinkels den Verlauf des effektiven Stellstromes - allgemein: der Stellgröße - repräsentieren, ohne daß dadurch der Rahmen der Erfindung verlassen wird.

## Patentansprüche

1. Verfahren zur Beeinflussung der Fahrgeschwindigkeit eines mit einer Brennkraftmaschine ausgerüsteten Kraftfahrzeugs in Abhängigkeit von einem Istgeschwindigkeitssignal und wenigstens einem vom Fahrpedal unabhängigen Fahrzustandssignal, dem wenigstens zwei Fahrzustände wie "Beschleunigen" und "Verzögern" zugeordnet sind, wobei eine Zumessung eines Luft-Kraftstoff-Gemisches in die Brennkraftmaschine über einen von einer Stellgröße angesteuerten elektromotorischen Steller geschieht und diese Stellgröße während der Wirksamkeit eines der Fahrzustände monoton über die Zeit verändert wird, danach die Stellgröße im Sinne einer Regelung der Geschwindigkeit auf einen vorgebbaren Wert beeinflußt wird,
dadurch gekennzeichnet, daß
am Ende eines dieser Fahrzustände eine Steuerung der Stellgröße vorgenommen wird, wobei die Stellgröße zunächst wenigstens quasi-sprunghaft und dann monoton über die Zeit so lange verändert wird, bis die Beschleunigung Null erreicht ist, worauf die dann vorliegenden Geschwindigkeit des Fahrzeuges eingehalten wird.

2. Verfahren nach Anspruch 1, dadurch gekennzeichnet, daß nach Wahl des Fahrzustands "Beschleunigen" die Stellgröße zunächst mit einer ersten, größeren Änderungsrate und dann anschließend mit einer zweiten, niedrigeren Änderungsrate monoton über der Zeit verändert wird.

3. Verfahren nach Anspruch 1, dadurch gekennzeichnet, daß bei Abwahl des Fahrzustands "Beschleunigen" eine sprunghafte Zurücksetzung der Stellgröße erfolgt, die jeweils proportional zur Stellgröße unmittelbar vor Abwahl des Fahrzustandes "Beschleunigen" ist.

4. Verfahren nach Anspruch 3, dadurch gekennzeichnet, daß nach erfolgter sprunghafte Rücksetzung der Stellgröße dieselbe monoton über der Zeit weiter verringert wird, solange, bis ein Fahrzustand mit der Beschleunigung Null erreicht ist.

5. Verfahren nach Anspruch 4, dadurch gekennzeichnet, daß die Änderungsrate der monoton über der Zeit verringerten Stellgröße proportional zur Stellgröße vor ihrer Zurücksetzung ist.

6. Verfahren nach Anspruch 5, dadurch gekennzeichnet, daß wenigstens zwei verschiedene Proportionalitätsfaktoren in Abhängigkeit vom Über- oder Unterschreiten eines vorgegebenen Bezugswertes der Stellgröße vor deren Rücksetzung Anwendung finden.

7. Verfahren nach Anspruch 6, dadurch gekennzeichnet, daß die wenigstens zwei verschiedenen Proportionalitätsfaktoren auf das Kraftfahrzeug abgestimmt und adaptiv verändert werden.

8. Verfahren nach Anspruch 5, dadurch gekennzeichnet, daß bei Überschreiten eines vorgebbaren Grenzwertes der Fahrgeschwindigkeit bei Vorliegen der Beschleunigung Null die Änderungsrate der Stellgröße um einen bestimmten Faktor vergrößert wird.

9. Verfahren nach Anspruch 8, dadurch gekennzeichnet, daß dieser bestimmte Faktor 1, 5 ... 3 beträgt.

10. Verfahren nach Anspruch 1, dadurch gekennzeichnet, daß nach Wahl des Fahrzustands "Verzögern" die Stellgröße mit einer ersten Änderungsrate monoton über der Zeit verringert wird, welche proportional zur Stellgröße vor der Wahl des Fahrzustandes "Verzögern" ist.

11. Verfahren nach Anspruch 10, dadurch gekennzeichnet, daß bei Abwahl des Fahrzustandes "Verzögern" eine sprunghafte Vergrößerung der Stellgröße erfolgt mit einer zweiten Änderungsrate, welche größer als die erste Änderungsrate ist, und die monoton auf den Wert Null abnimmt.

12. Verfahren nach Anspruch 1, dadurch gekennzeichnet, daß in Abhängigkeit besagten logischen Fahrzustandsignals noch wenigstens ein weiterer, dritter Fahrzustand "Wiederaufnahme" vorgesehen ist, und daß nach Wahl dieses Fahrzustandes die Stellgröße zunächst mit einer ersten, größeren Änderungsrate und dann anschließend mit einer zweiten niedrigeren Änderungsrate monoton über der Zeit verändert wird, bis eine wieder aufzunehmende Fahrgeschwindigkeit erreicht ist.

13. Verfahren nach Anspruch 12, dadurch gekennzeichnet, daß nach Erreichen einer wieder aufzunehmenden Fahrgeschwindigkeit die Stellgröße mit monotan abnehmender Änderungsrate auf einen Wert zurückgesetzt wird, der größer ist als der entsprechende Wert vor Anwahl des Fahrzustandes "Wiederaufnahme".

14. Verfahren nach einem der Ansprüche 1 bis 11, dadurch gekennzeichnet, daß zur Aktivierung wenigstens zweier vom Fahrer wählbarer Fahrzustände dieselben für eine bestimmte Mindestdauer, vorzugsweise 0,03 ... 0,3 Sekunden lang, angewählt werden müssen.

15. Einrichtung zur Durchführung des Verfahrens wenigstens nach Anspruch 1, bestehend aus
   - einem Istgeschwindigkeitsgeber (31) zur Bereitstellung eines Istgeschwindigkeitssignals,
   - einem Fahrzustandswähler (20) zur Bereitstellung eines Fahrerwunschsignals zur alternativen Anwahl wenigstens zweier Fahrzustände wie "Beschleunigen", "Verzögern", "Wiederaufnahme",
   - einem das Luft-Kraftstoff-Gemisch beeinflussenden Aggregat, insbesondere einer elektromotorisch verstellbaren Drosselklappe oder einer Dieseleinspritzpumpe, dem eine Stellgröße zuführbar ist,
   - einem elektronischen Steuergerät (10), dem wenigstens besagtes Istgeschwindigkeitssignal und besagtes Fahrerwunschsignal zuführbar ist, dem wenigstens eine Stellgröße entnehmbar ist und das wenigstens einen Rechner (11) und einen Speicher (12) enthält,
   - wobei der Rechner (11) wenigstens einen PI-Regler (54) nachbildet, dessen P- und I-Komponenten 24- und abschaltbar sind und für die Bestimmung der P- und I-Komponenten im Speicher (12) fest abgelegte Werte in das Programm des Rechners (11) ladbar sind, und der derart ausgestaltet ist, daß während der Wirksamkeit eines Fahrzustandes die Stellgröße monoton über die Zeit verändert wird, außerhalb die Geschwindigkeit des Fahrzeugs im Sinne einer Regelung auf einen vorgebbaren Wert eingehalten wird,

dadurch gekennzeichnet daß

- der Rechner weiterhin derart ausgestaltet ist, daß am Ende eines Fahrzustandes die Stellgröße derart gesteuert wird, daß diese quasi-sprungförmig verändert und anschließend monoton über die Zeit gesteuert verändert wird, bis die Beschleunigung Null erreicht ist, anschließend die dann vorliegende Geschwindigkeit durch Regelung eingehalten wird, wobei wenigstens die Integralkomponente des PI-Regler während der Wirksamkeit der Fahrzustände unveränderlich ist.

16. Einrichtung nach Anspruch 15, dadurch gekennzeichnet, daß während Übergängen von einer ersten zu einer zweiten Geschwindigkeit ("Beschleunigen", "Verzögern", "Wiederaufnahme") der PI-Regler bei festgehaltenem I-Anteil als P-Regler betreibbar ist, und daß bei Nichtvorliegen eines solchen Überganges ("Halten der Geschwindigkeit") der Regler (54) mit vorladbarem I-Anteil als PI-Regler betreibbar ist.

17. Einrichtung nach Anspruch 15, dadurch gekennzeichnet, daß während Übergängen von einer ersten zu einer zweiten Geschwindigkeit die I-Komponente des Reglers abschaltbar und die P-Verstärkung des Reglers gegenüber derjenigen im eingeschwungenen Zustand bei konstant gehaltener Fahrgeschwindigkeit vergrößerbar ist.

18. Einrichtung nach einem der vorherigen Ansprüche 15 bis 17, dadurch gekennzeichnet, daß die I-Komponente des Reglers (54) einschaltbar ist, sobald ein Fahrzustand mit der Beschleunigung gleich Null erreicht ist, und daß der dabei aktuelle Geschwindigkeitswert als Sollwertvorgabe abspeicherbar ist.

19. Einrichtung nach einem der Ansprüche 15 bis 18, dadurch gekennzeichnet, daß sowohl die P-Komponente als auch die I-Komponente des Reglers (54) während Übergangszuständen des Kraftfahrzeugs von einer ersten konstanten Geschwindigkeit auf eine zweite konstante Geschwindigkeit unabhängig voneinander veränderbar sind.

20. Einrichtung nach Anspruch 19, dadurch gekennzeichnet, daß die Veränderung von I- und P-Komponenten so erfolgt, daß die Summe aus I- und P-Anteil bei der Veränderung konstant bleibt.

21. Einrichtung nach Anspruch 19, dadurch gekennzeichnet, daß die im Speicher (12) abgelegten Werte auch Grenzwerte umfassen, welche Geschwindigkeitsabweichungsschranken repräsentieren, bei deren Über- oder Unterschreitung die Stellgröße bezüglich ihres zeitlichen Verlaufs charakteristisch veränderbar ist.

22. Einrichtung nach wenigstens einem der Ansprüche 15 bis 20, dadurch gekennzeichnet, daß Geschwindigkeitsänderungen und somit jeweils neu aufzunehmende Geschwindigkeiten durch hinreichend kurze Momentanbetätigung des Fahrzustandswählers (20) in- oder dekrementweise einstellbar sind.

**Claims**

1. Method for influencing the travelling speed of a motor vehicle equipped with an internal combustion engine in dependence on an actual-speed signal and at least one travelling state signal independent of the gas pedal, which is associated with at least two travelling states such as "accelerating" and "decelerating", in which method an air/fuel mixture is metered into the internal combustion engine via an electromotive actuator driven by a manipulated variable and this manipulated variable is changed monotonically with time during the effectiveness of one of the travelling states and then the manipulated variable is influenced with the aim of controlling the speed to a predeterminable value, characterised in that at the end of one of these travelling states, the manipulated variable is controlled, the manipulated variable initially being changed at least quasi-abruptly and then monotonically with time until zero acceleration has been reached whereupon the vehicle speed then existing is maintained.

2. Method according to Claim 1, characterised in that after the "accelerating" travelling state has been selected, the manipulated variable is initially changed at a first, greater rate of change and then subsequently is changed monotonically with time at a second lower rate of change.

3. Method according to Claim 1, characterised in that when the "accelerating" travelling state is deselected, an abrupt resetting of the manipulated variable occurs which is in each case proportional to the manipulated variable directly before deselection of the "accelerating" travelling state.

4. Method according to Claim 3, characterised in that after the completed abrupt resetting of the manipulated variable, the latter is monotonically further reduced with time until a travelling state with zero acceleration is reached.

5. Method according to Claim 4, characterised in that the rate of change of the manipulated variable reduced monotonically with time is proportional to the manipulated variable before it was reset.

6. Method according to Claim 5, characterised in that at least two different proportionality factors are used in dependence on whether the manipulated variable before its resetting exceeded or dropped below a predetermined reference value.

7. Method according to Claim 6, characterised in that at least two different proportionality factors are matched to the motor vehicle and are adaptively changed.

8. Method according to Claim 5, characterised in that when a predeterminable limit value of the travelling speed is exceeded when zero acceleration exists, the rate of change of the manipulated variable is increased by a certain factor.

9. Method according to Claim 8, characterised in that this certain factor is 1, 5 ... 3.

10. Method according to Claim 1, characterised in that after the "decelerating" travelling state has been selected, the manipulated variable is monotonically reduced with time at a first rate of change which is proportional to the manipulated variable before the selection of the "decelerating" travelling state.

11. Method according to Claim 10, characterised in that when the "decelerating" travelling state is deselected, the manipulated variable is abruptly increased at a second rate of change which is greater than the first rate of change and which monotonically decreases to the value zero.

12. Method according to Claim 1, characterised in that, in dependence on the said logical travelling state signal, at least one further third travelling state "resumption" is provided and that after this travelling state has been selected, the manipulated variable is initially changed at a first, greater rate of change and then subsequently monotonically with time at a second lower rate of change until a travelling speed to be resumed is reached.

13. Method according to Claim 12, characterised in that after a travelling speed to be resumed has been reached, the manipulated variable is reset at a monotonically decreasing rate of change to a value which is greater than the corresponding value before selection of the "resumption" travelling state.

14. Method according to one of Claims 1 to 11, characterised in that, for activating at least two travelling states to be selected by the driver, these states must be selected for a certain minimum period, preferably 0.03 ... 0.3 seconds long.

15. Device for carrying out the method at least according to Claim 1, consisting of
    - an actual-speed transmitter (31) for providing an actual-speed signal,
    - a travelling state selector (20) for providing a driver requirement signal for alternatively selecting at least two travelling states such as "accelerating", "decelerating", "resumption",
    - a unit influencing the air/fuel mixture, particularly an electromotively adjustable throttle flap or a diesel injection pump which can be supplied with a manipulated variable,
    - an electronic control device (10) which can be supplied at least with the said actual-speed signal and the said driver requirement signal, from which at least one manipulated variable can be taken and which contains at least one processor (11) and one memory (12),
    - in which arrangement the processor (11) emulates at least one PI control (54), the P and I components of which can be connected and disconnected, and values permanently stored in the memory (12) for determining the P and I components can be loaded into the program of the processor (11), and which is designed in such a manner that the manipulated variable is monotonically changed with time during the effectiveness of one travelling state, and outside the speed of the vehicle is maintained with the aim of controlling it to a predeterminable value, characterised in that
    - the processor is furthermore designed in such a manner that at the end of a travelling state, the manipulated variable is controlled in such a manner that it is quasi-abruptly changed and subsequently changed controlled monotonically with time until zero acceleration is reached, subsequently the speed then existing is maintained by closed-loop control, at least the integral component of the PI controller being invariable during the effectiveness of the travelling states.

16. Device according to Claim 15, characterised in that during transitions from a first to a second speed ("accelerating", "decelerating", "resumption"), the PI controller with its I component held can be operated as P controller, and in that in the event of the nonexistence of such a transition ("holding of speed"), the controller (54) can be operated as PI controller with preloadable I component.

17. Device according to Claim 15, characterised in that during transitions from a first to a second speed, the I component of the controller can be disconnected and the P gain of the controller can be increased with respect to that in the settled state when the travelling speed is kept constant.

18. Device according to one of the preceding Claims 15 to 17, characterised in that the I component of the controller (54) can be switched on as soon as a travelling state with the acceleration equal to zero is reached and that the speed value current in this state can be stored as set point input.

19. Device according to one of Claims 15 to 18, characterised in that both the P component and the I component of the controller (54) can be changed independently of one another during states of transition of the motor vehicle from a first constant speed to a second constant speed.

20. Device according to Claim 19, characterised in that the I and P components are changed in such a manner that the sum of I and P component remains constant during the changing.

21. Device according to Claim 15, characterised in that the values stored in the memory (12) also comprise limit values which represent speed deviation barriers and when the values exceed or drop below these barriers, the manipulated variable can be characteristically changed with respect to its variation with time.

22. Device according to at least one of Claims 15 to 20, characterised in that speed changes and thus speeds newly to be accommodated in each case can be incrementally or decrementally set by sufficiently short momentary operation of the travelling state selector (20).

**Revendications**

1. Procédé pour influencer la vitesse de déplacement d'un véhicule automobile équipé d'un moteur à combustion interne, en fonction d'un signal de vitesse effective et d'au moins un signal d'état de marche indépendant de la pédale d'accélérateur, avec au moins deux états de marche comme "accélérer" et "ralentir", selon lequel un dosage de mélange air-carburant dans le moteur s effectue au moyen d'un organe de régulation à moteur électrique commandé par une grandeur de réglage, cette grandeur de position variant de façon monotone dans le temps pendant le fonctionnement de l'un des états de marche que la grandeur de réglage est influencée dans le sens d'une régulation de la vitesse par une valeur prédéterminable, caractérisé en ce que : à la fin d'un de ces états de marche, on commande la grandeur de réglage, qui varie d'abord au moins de façon quasi discontinue, puis de manière monotone dans le temps jusqu'à ce que l'accélération soit nulle, puis on maintient la vitesse ainsi atteinte du véhicule.

2. Procédé selon la revendication 1, caractérisé en ce qu'après la sélection de l'état de marche "accélérer" , on fait varier la grandeur de réglage d'abord avec un premier taux d'évolution plus important, puis ensuite avec un deuxième taux d'évolution plus faible, de façon monotone dans le temps.

3. Procédé selon la revendication 1, caractérisé en ce qu'après la sélection de l'état de marche "accélérer", on effectue une remise à Zéro discontinue de la grandeur de réglage qui est toujours directement proportionnelle à la grandeur de réglage, avant la sélection de l'état de marche "accélérer".

4. Procédé selon la revendication 3, caractérisé en ce qu'après la remise à zéro discontinue de la grandeur de réglage, on fait diminuer cette dernière de façon monotone dans le temps, jusqu'à ce que l'on ait atteint un état de marche avec une accélération nulle.

5. Procédé selon la revendication 4, caractérisé en ce que le taux d'évolution de la grandeur de position diminuant dans le temps de façon monotone est proportionnel à la grandeur de position avant sa remise à l'état initial.

6. Procédé selon la revendication 5, caractérisé en ce qu'on utilise au moins deux facteurs de proportionnalité différents en fonction du dépassement vers le haut ou le bas d'une valeur de référence prédéterminée de la grandeur de réglage avant sa remise à l'état initial.

7. Procédé selon la revendication 6, caractérisé en ce qu'on harmonise au moins deux facteurs de proportionnalité différents avec le véhicule et on les fait varier de façon adaptative.

8. Procédé selon la revendication 5, caractérisé en ce qu'en cas de dépassement d'une valeur limite prédéterminable de la vitesse du véhicule à l'accélération nulle, on augmente le taux d'évolution de la grandeur de réglage d'un facteur détermine.

9. Procédé selon la revendication 8, caractérisé en ce que ce facteur déterminé s'élève à une valeur comprise entre 1,5 et 3.

10. Procédé selon la revendication 1, caractérisé en ce qu'après sélection de l'état de marche "ralentir" , on diminue la grandeur de réglage d'une façon monotone dans le temps avec un taux d'évolution proportionnel à la grandeur de réglage avant la sélection de l'état de marche "ralentir".

11. Procédé selon la revendication 10, caractérisé en ce que la sélection de l'état de marche "ralentir" produit une augmentation par paliers de la grandeur de réglage avec un deuxième taux d'évolution, supérieur au premier taux d'évolution, et qui diminue de façon monotone jusqu'à la valeur zéro.

12. Procédé selon la revendication 1, caractérisé en ce qu'en fonction des signaux logiques d'état de marche susmentionnés, il est prévu en outre au moins un troisième état de marche "reprise", et après la sélection de cet état de marche, on modifie la grandeur de réglage d'abord avec un premier taux d'évolution plus élevé, puis ensuite avec un deuxième taux d'évolution plus faible, de façon monotone dans le temps, jusqu'à ce que l'on ait atteint à nouveau une vitesse de déplacement à respecter.

13. Procédé selon la revendication 12, caractérisé en ce qu'après avoir atteint à nouveau une vitesse à respecter, on fait régresser la grandeur de réglage, avec un taux d'évolution monotone dans le sens de la diminution, jusqu'à une valeur supérieure à la valeur correspondante avant la sélection de l'état de marche "reprise".

14. Procédé selon l'une des revendications 1 à 11, caractérisé en ce que pour activer au moins deux des états de marche sélectionnables par le conducteur, la sélection de ceux-ci doit être maintenue pendant une durée minimale déterminée, de préférence de 0,03 à 0,3 seconde.

15. Dispositif pour la mise en oeuvre du procédé selon au moins la revendication 1, comprenant :
    - un capteur de vitesse réelle (31) pour fournir un signal de vitesse réelle,
    - un sélecteur d'états de marche (20) pour fournir un signal de souhait du conducteur pour une sélection alternative d'au moins deux états de marche comme "accélérer", "ralentir", "reprise",
    - un ensemble influençant le mélange air-carburant, en particulier un papillon de commande positionné par un moteur électrique ou une pompe d'injection de Diesel, recevant une grandeur de réglage,
    - un appareil de commande électronique (10) qui reçoit au moins le signal de vitesse réelle et le signal de souhait du conducteur et qui fournit au moins une grandeur de réglage, et qui comporte au moins un calculateur (11) et une mémoire (12),
    - le calculateur (11) étant constitué par au moins un organe de régulation (P-I) (proportionnel-intégral) (54), dont les composantes (P) et (I) peuvent être mises en service et hors service et dont la détermination des composantes (P) et (I) peut se faire par des valeurs fixes enregistrées dans le programme du calculateur (11), et qui est conçu de telle sorte que, pendant le temps de fonctionnement d'un état de marche, la grandeur de réglage varie de façon monotone dans le temps, sauf si la vitesse du véhicule est maintenue à une valeur prédéterminée au sens d'une régulation, caractérisé en ce que :
    - le calculateur est en outre conçu de telle sorte qu'à la fin d'un état de marche, la grandeur de réglage est commandée de telle manière qu'elle varie de façon quasi discontinue et qu'ensuite elle varie de façon monotone dans le temps, jusqu'à atteindre l'accélération nulle, qu'ensuite la vitesse existant est maintenue par régulation, l'une au moins des composantes intégrales de l'organe de régulation (PI) (proportionnel-intégral) restant invariable pendant le temps de fonctionnement de l'état de marche.

16. Dispositif selon la revendication 15, caractérisé en ce que, pendant les transitions d'une première à une deuxième vitesse ("accélérer", "ralentir", "reprise"), le régulateur (PI) (proportionnel-intégral) peut être, par blocage de la partie (I), exploité en organe de régulation (P), et qu'en l'absence d'une telle transition ("maintien de la vitesse"), le régulateur (54) peut être exploité en organe de régulation (PI) (proportionnel-intégral) par chargement préalable de la partie (I).

17. Procédé selon la revendication 15, caractérisé en ce que, pendant les transitions d'une première à une deuxième vitesse, on peut mettre hors service la composante (I) de l'organe de régulation et qu'on peut augmenter l'amplification P de l'organe de régulation par rapport à celle à l'état d'entrée en oscillation à vitesse de déplacement maintenue constante.

18. Dispositif selon l'une des revendications précédentes 15 à 17, caractérisé en ce que la composante (I) de l'organe de régulation (54) peut être coupée dès que l'on arrive à un état de marche avec une accélération nulle et la valeur instantanée de la vitesse est mise en mémoire comme grandeur de consigne.

19. Dispositif selon l'une des revendications 15 à 18, caractérisé en ce qu'à la fois la composante (P) et la composante (I) de l'organe de régulation (54) peuvent être modifiées indépendamment l'une de l'autre pendant les états transitoires du véhicule automobile, passant d'une première vitesse constante à une seconde vitesse constante.

20. Dispositif selon la revendication 19, caractérisé en ce que la variation des composantes (I) et (P) se fait de telle manière que la somme des parties (I) et (P) reste constante pendant la variation.

21. Dispositif selon la revendication 15, caractérisé en ce que les valeurs inscrites dans la mémoire (12) comprennent également des valeurs limites qui représentent des limites de déviation de vitesse dont le dépassement vers le haut ou vers le bas modifie de manière caractéristique les grandeurs de réglage quant à leur chronogramme.

22. Dispositif selon au moins l'une des revendications 15 à 20, caractérisé en ce que les variations de vitesse et ainsi les vitesses a reprendre de nouveau à chaque fois se règlent par des actionnements instantanés suffisamment courts du sélecteur d'état (20) par incrémentation ou décrémentation.

FIG.1

FIG.2

EP 0 278 232 B1

FIG.3A

FIG.3B

FIG.3C

FIG.4A

FIG.4B

FIG.4C

FIG.5A

FIG.5B

FIG.5C